# FASCICULE DE BREVET EUROPEEN

(11) **EP 2 629 201 B1**
(45) Date de publication et mention de la délivrance du brevet: **13.12.2017**
(21) Numéro de dépôt: 13150174.4
(22) Date de dépôt: 03.01.2013
(51) Int. Cl.: G06F 11/07, G05B 23/02

(54) **Procédé et système de détection d'anomalies à solutionner dans un aéronef**
Verfahren und System zur Erkennung von Fehlern, die in einem Luftfahrzeug zu lösen sind
Method and system for detecting anomalies to be solved in an aircraft

(30) Priorité: 15.02.2012 FR 1251389
(43) Date de publication de la demande: 21.08.2013
(73) Titulaire: Airbus Operations, 31060 Toulouse (FR)
(72) Inventeur: Granier, Nicolas, 31330 Merville (FR)
(74) Mandataire: Santarelli

(56) Documents cités:
- FR-A1- 2 916 890
- FR-A1- 2 920 014
- FR-A1- 2 927 435
- FR-A1- 2 946 023

## Description

La présente invention concerne le domaine aéronautique, et plus particulièrement un procédé et un système de détection d'anomalies à solutionner dans un aéronef.

Les aéronefs disposent généralement d'un système central de surveillance et de maintenance permettant d'assister les opérateurs de maintenance dans la détermination d'anomalies dans un aéronef.

Le système central ou CMS (pour Centralized Maintenance System) est relié à de nombreux systèmes ou calculateurs embarqués qui s'auto-surveillent et/ou surveillent d'autres systèmes embarqués, et sont donc susceptibles de générer des anomalies, irrégularités ou « pannes » de certains systèmes embarqués.

A partir de nombreux signaux d'anomalie émis par ces calculateurs embarqués et collectés, le CMS génère pour chaque vol un rapport (ou PFR pour Post Flight Report) listant les nombreuses anomalies collectées. Dans les versions récentes d'aéronef, ce rapport est stocké dans l'aéronef sous forme électronique, généralement sous forme de fichier XML (pour extensible Markup Language). Le personnel de maintenance accède alors au rapport par extraction du fichier XML PFR, l'analyse et procède ensuite à la correction des différentes anomalies ou pannes listées.

Une des difficultés actuelles pour le personnel de maintenance réside dans le fait que le nombre d'anomalies listées dans ce rapport peut être important.

Pendant les phases de conception de l'aéronef, des essais peuvent être menés, en vol ou au sol, au cours desquels des configurations génératrices d'anomalies sont testées. Or ces anomalies sont systématiquement vues par le CMS comme des pannes alors qu'en réalité elles n'avertissent pas d'une réelle panne.

Il n'est ainsi pas rare que des rapports PFR listent 150 à 200 signaux d'anomalie pendant un essai, nécessitant alors soit un personnel de maintenance nombreux, soit de nombreuses heures d'analyse pour ce personnel avant de corriger les véritables erreurs, c'est-à-dire celles non induites par la configuration particulière de l'aéronef lors de l'essai ou non induites par les tests menés.

On connait, de la demande FR 2 927 435, un filtrage des signaux reçus par le CMS afin d'en supprimer des messages intempestifs et ainsi de les ignorer. Le rapport PFR est ainsi réduit en taille. Toutefois, un mauvais filtrage peut faire disparaître, du rapport PFR, des anomalies sérieuses. Des pannes ne sont alors pas résolues par le personnel de maintenance.

La demande FR 2 946 023 décrit un dispositif de traitement de pannes permettant d'afficher les pannes selon un attribut hiérarchique qui leur est associé en fonction de l'historique des pannes et de l'impact des pannes sur la disponibilité de l'avion.

La présente invention vise à pallier tout ou partie des inconvénients susmentionnés en permettant notamment la mise en évidence des « vraies » anomalies à solutionner à partir du rapport PFR.

Dans ce dessein, l'invention concerne tout d'abord un procédé de détection d'anomalies à solutionner dans un aéronef, comprenant les étapes suivantes :
- obtenir, d'un système central de maintenance (CMS) embarqué de l'aéronef, un ensemble de signaux d'anomalie émis par au moins un calculateur embarqué de l'aéronef pendant une phase de fonctionnement de ce dernier ;
- confronter ledit ensemble de signaux d'anomalie à au moins une base de données référençant une pluralité d'anomalies prédéfinies, dites fausses anomalies ; et
- générer, à partir du résultat de la confrontation, un rapport comprenant l'ensemble des signaux d'anomalie obtenus, identifiant les anomalies à solutionner parmi l'ensemble de signaux d'anomalie et identifiant les fausses anomalies.

La présente invention permet de réduire substantiellement le nombre d'anomalies à analyser et à solutionner pour le personnel de maintenance recevant le rapport. Ce dernier peut ainsi réduire drastiquement son temps d'intervention passant par exemple de plusieurs heures à quelques dizaines de minutes.

Cette réduction substantielle résulte selon l'invention de l'utilisation d'une base de données dans laquelle sont listées des « fausses » anomalies (par exemple des anomalies volontairement induites du fait de tests ou de configurations altérées de l'aéronef) et à laquelle est confronté un rapport classique PFR afin d'y identifier les seules anomalies à solutionner méritant analyse.

L'invention permet aussi à un opérateur de maintenance de vérifier le classement de certaines anomalies en « fausses anomalies », car ces dernières sont conservées à l'intérieur du rapport généré.

L'identification/classement des anomalies constitue par conséquent une aide à la décision pour l'opérateur de maintenance.

Corrélativement, l'invention concerne également un système de détection de anomalies à solutionner dans un aéronef, comprenant:
- au moins une base de données référençant une pluralité d'anomalies prédéfinies, dites fausses anomalies;
- un module d'obtention, en provenance d'un système central de maintenance embarqué de l'aéronef, d'un ensemble de signaux d'anomalie émis par au moins un calculateur embarqué de l'aéronef pendant une phase de fonctionnement de ce dernier ;
- un module pour confronter ledit ensemble de signaux d'anomalie à l'au moins une base de données ; et
- un module pour générer, à partir du résultat de la confrontation, un rapport comprenant l'ensemble des signaux d'anomalie obtenus, identifiant les anomalies à solutionner parmi l'ensemble de signaux d'anomalie et identifiant les fausses anomalies.

Les avantages procurés par ce système de détection sont similaires à ceux évoqués précédemment en lien avec le procédé de détection d'anomalies.

De façon optionnelle, le procédé et le système peuvent comprendre des caractéristiques relatives à différents modes de réalisation tels que décrits par la suite.

En particulier, ladite au moins une base de données peut comprendre une première base de données référençant des signaux d'anomalie fonction d'une configuration courante de l'aéronef ; une seconde base de données référençant des signaux d'anomalie liés à des tests menés sur l'aéronef lors de ladite phase de fonctionnement ; et une troisième base de données référençant des déviations connues de systèmes embarqués dans l'aéronef. Cette configuration permet de tenir compte des principales « fausses » erreurs, à savoir celles résultant de la configuration même de l'aéronef (l'absence d'un équipement dans un aéronef de test peut générer automatiquement un signal d'erreur en continu), celles résultant des tests menés car ceux-ci visent généralement à mettre les systèmes embarqués dans des situations d'anomalies pour tester les procédures de sauvegarde (test des systèmes redondants par exemple), ou encore celles relatives à des bogues ou limitations connues des systèmes embarqués.

Ainsi, un ensemble de fausses anomalies référencées dans ladite au moins une base de données est fonction d'une configuration courante de l'aéronef. Dans ce cas, la base de données référence comme « fausses » anomalies des signaux d'anomalie résultant de cette configuration courante de l'aéronef, par exemple l'absence d'équipements, de cabine, etc. lors de tests en production. Le référencement de ce type de fausses anomalies est efficace lors de tests menés sur un aéronef partiellement configuré (par exemple les premiers tests avec un aéronef vide équipé seulement du cockpit).

Dans un mode de réalisation, ladite au moins une base de données référence comme fausses anomalies des signaux d'anomalie liés à des tests menés sur l'aéronef lors de ladite phase de fonctionnement. Cette phase de fonctionnement peut notamment être une phase de test ou d'essai en vol ou au sol. En effet, dans ce cas, il convient de pouvoir identifier, dans le rapport PFR, les fausses anomalies résultant d'actions volontaires à raison des tests menés.

Le procédé peut alors comprendre les étapes suivantes :
- identifier, parmi l'ensemble obtenu de signaux d'anomalie, des signaux d'anomalie liés à des tests menés sur l'aéronef ; et
- confirmer ou infirmer, par un opérateur, la classification comme fausse anomalie de chaque signal d'anomalie ainsi identifié par comparaison avec des anomalies résultant d'actions volontaires et stockées dans l'au moins une base de données.

Cette disposition permet d'appliquer un traitement spécifique à ces anomalies induites par les tests menés. En effet, si certaines sont effectivement induites par ces tests, d'autres potentiellement induites par ceux-ci également sont en réalité de vraies anomalies. L'opération de confirmation ou infirmation par l'opérateur, par exemple l'ingénieur naviguant pendant les tests, permet *in fine* de ne conserver que les vraies anomalies. Dans ce cas, le module pour confronter identifie, parmi l'ensemble obtenu de signaux d'anomalie, des signaux d'anomalie liés aux tests menés sur l'aéronef ; et le système comprend un module pour confirmer ou infirmer, via une interface homme-machine, la classification comme fausse anomalie de chaque signal d'anomalie ainsi identifié.

En particulier, la confirmation ou infirmation est fonction d'une information d'horodatage dudit signal d'anomalie identifié, laquelle information d'horodatage pour le signal d'anomalie identifié étant comparée à un horaire de réalisation d'une dite action volontaire. Cette information d'horodatage associée par exemple à chaque signal d'anomalie d'un rapport PFR permet à l'opérateur de corroborer de façon certaine ce signal avec une action de test menée pendant ladite phase de fonctionnement (d'essai en vol ou au sol). Toutefois, l'opérateur pourrait se passer de cette information d'horodatage.

Dans un autre mode de réalisation, le procédé comprend en outre l'étape consistant à générer ladite au moins une base de données avant ladite confrontation, en fonction d'une configuration matérielle de l'aéronef pendant ladite phase de fonctionnement et en fonction de tests menés sur ledit aéronef pendant ladite phase de fonctionnement.

Dans encore un autre mode de réalisation, ladite au moins une base de données référence comme fausses anomalies des déviations connues de systèmes embarqués dans l'aéronef. Cette disposition permet de tenir compte des bogues ou anomalies connues des systèmes embarqués aux fins d'épurer le rapport PFR classique de ces anomalies pour obtenir un rapport optimisé selon l'invention.

En particulier, ledit rapport généré liste également lesdites fausses anomalies de l'ensemble obtenu de signaux d'anomalie, et inclut, pour chaque fausse anomalie de type déviation connue, une information de maintenance prédéfinie dans ladite au moins une base de données. Cette information de maintenance peut par exemple contenir des informations sur les opérations de maintenance à réaliser pour ces « fausses » anomalies, par exemple une réinitialisation d'un système embarqué en raison d'un bogue de mesure détectée. Cette disposition permet ainsi de réduire encore le temps d'intervention du personnel de maintenance puisque pour ces « fausses » anomalies de type bogues ou anomalies connues, le rapport généré fournit directement les opérations de maintenance à réaliser.

Afin de tenir compte de nouvelles « fausses » erreurs potentiellement identifiées par le personnel de maintenance dans le rapport généré selon l'invention, l'invention prévoit également, dans un mode de réalisation particulier, que le procédé puisse comprendre une étape consistant à mettre à jour ladite au moins une base de données à partir d'au moins une fausse anomalie identifiée dans ledit rapport généré. C'est par exemple le cas si l'une des anomalies listées dans le rapport généré s'avère, après analyse, être un simple bogue du système embarqué. Le système selon l'invention comprend alors un module de mise à jour de ladite de l'au moins une base de données des fausses anomalies à partir d'au moins une fausse anomalie identifiée dans ledit rapport généré.

Selon un mode de réalisation de l'invention de mise en oeuvre simple, les signaux d'anomalie obtenus du système central de maintenance comprennent chacun un identifiant unique respectif, dit « Fault Code », et ladite confrontation comprend la comparaison de l'identifiant unique de chaque signal d'anomalie obtenu avec des identifiants uniques de fausses anomalies stockés dans l'au moins une base de données.

D'autres particularités et avantages de l'invention apparaîtront encore dans la description ci-après, illustrée par les dessins ci-joints, dans lesquels :
- la **figure 1** illustre schématiquement un aéronef classique doté d'une pluralité de systèmes embarqués ;
- la **figure 2** représente un extrait XML simplifié de rapport PFR correspondant à un seul signal d'anomalie ;
- la **figure 3** illustre un exemple d'architecture matérielle d'un système de détection d'anomalies selon l'invention ;
- la **figure 4** représente un ordinogramme illustrant des étapes générales d'un mode de réalisation de l'invention ;
- la **figure 5** illustre un rapport d'anomalies généré selon un mode de réalisation de l'invention ; et
- la **figure 6** illustre une fonction supplémentaire fournie lors de l'affichage du rapport d'anomalies de la **figure 5****.**

La présente invention fournit des procédés et systèmes de détection d'anomalies à solutionner dans un aéronef, typiquement un avion en phase de production, c'est-à-dire lorsque des tests et des essais sont menés sur celui-ci.

En effet, avant la livraison de celui-ci, de nombreux essais sont menés, notamment au sol moteurs tournants et en vol. Lors de ces essais, de nombreuses mesures et/ou tests sont réalisées sur les systèmes embarqués.

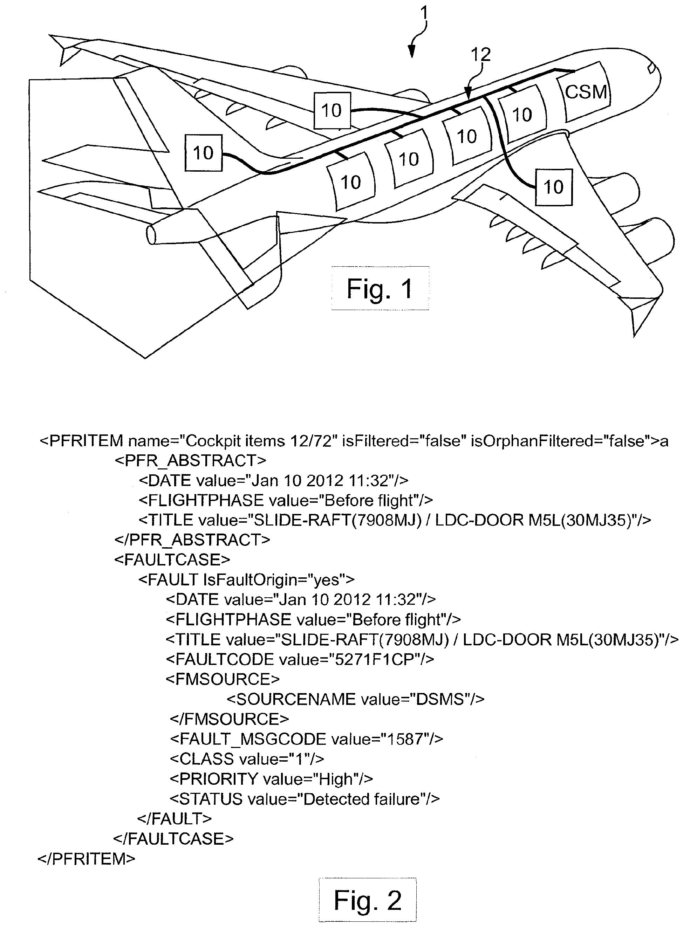

La **figure 1** illustre schématiquement un aéronef 1 comprenant une multitude de systèmes embarqués 10, par exemple des systèmes mécaniques, électriques ou hydrauliques tels des pompes, des calculateurs, des instruments de mesure, des pilotes automatiques, des équipements de cabine, etc. Les avions modernes présentent plusieurs milliers de tels systèmes embarqués généralement reliés au réseau classique 12 de l'aéronef, de type Ethernet-AFDX (pour Avionics Full DupleX).

Nombre de ces systèmes embarqués sont configurés pour transmettre des signaux d'anomalie interne ou des signaux de « panne » à un système central de maintenance CMS également connecté au réseau AFDX 12. D'autres systèmes embarqués sont surveillés par des modules de test, également connus sous l'appellation « modules BiTE » (pour Built-in Test Equipment), aptes à détecter et à remonter au CMS une éventuelle défaillance ou anomalie d'un système surveillé. Une anomalie peut par exemple résulter d'une valeur mesurée trop importante (ou trop faible), ou encore de la disparition d'un signal. Bien entendu, de nombreuses autres situations sont susceptibles de générer de telles anomalies.

De façon classique, le CMS enregistre les différents signaux d'anomalie en provenance des systèmes embarqués ou modules BiTE associés à partir du moment où les moteurs tournent. Cet instant (moteurs mis en marche) définit un point de départ d'une phase de fonctionnement de l'aéronef 1, par exemple pour un essai au sol ou un essai en vol, jusqu'à extinction des mêmes moteurs à l'issue de l'essai.

Les signaux d'anomalie générés sont mémorisés dans un fichier de logs (ou historique d'événements) constituant généralement le rapport PFR fourni par le CMS à l'issue de l'essai. De par la nature des logs enregistrés, ce fichier est généralement du type fichier XML dans lequel chaque nouvel événement est un nouvel élément XML.

Dans un mode de réalisation, chaque événement enregistré comprend un identifiant unique de signal d'anomalie associé à une donnée d'horodatage. L'identifiant unique est par exemple un chaîne de huit caractères, les quatre premiers étant purement numériques (chacun de 0 à 9) et les quatre derniers étant alphanumériques (chacun de 0 à 9 puis A à Z). Par exemple, « 3436F3JX » identifie de façon unique une anomalie particulière au niveau d'une unité de référence inertielle ADIRU (pour Air Data Inertial Reference Unit). La donnée d'horodatage peut notamment contenir une date et une heure avec une précision de l'ordre de la seconde ou de la minute.

La **figure 2** représente un extrait XML simplifié de rapport PFR correspondant à un seul signal d'anomalie. Dans cet exemple, l'identifiant unique nommé « Fault Code » vaut « 5271 F1 CP » correspondant à une anomalie au niveau d'une porte M5L, et est horodaté du 10 janvier 2012 à 11 heures 32 minutes.

Le rapport PFR au format XML est récupéré depuis l'avion 1 par un opérateur de maintenance à l'aide de techniques classiques (sur support d'enregistrement, type CD ou clé USB par exemple) puis fourni à un système de détection d'anomalies à solutionner selon l'invention.

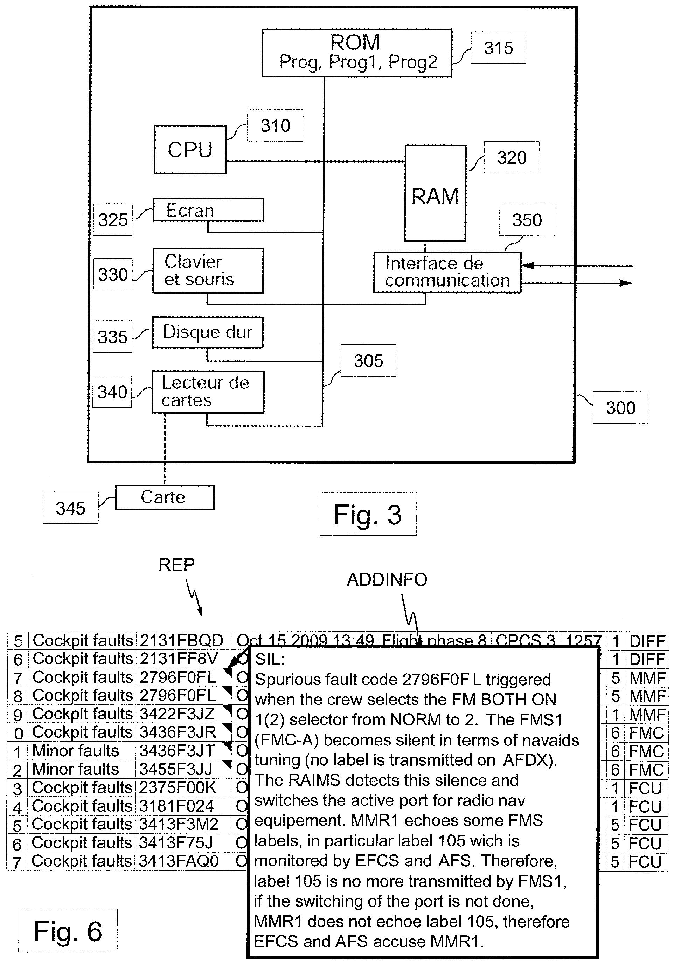

La **figure 3** illustre un exemple d'architecture matérielle pour un tel système, par exemple un ordinateur, adaptée à mettre en oeuvre certaines étapes de l'invention, en particulier les étapes mises en oeuvre pour la détection d'anomalies à solutionner dans un avion. Le dispositif 300 comporte ici un bus de communication 305 auquel sont reliés :
- une ou plusieurs unités centrales de traitement ou microprocesseurs 310 (CPU, sigle de *Central Processing Unit* en terminologie anglo-saxonne) ;
- une mémoire morte 315 (ROM, acronyme de *Read Only Memory* en terminologie anglo-saxonne) pouvant comporter des programmes (prog, prog1 et prog2) nécessaires à la mise en oeuvre de l'invention ;
- une mémoire vive ou mémoire cache 320 (RAM, acronyme de *Random Access Memory* en terminologe anglo-saxonne) comportant des registres adaptés à enregistrer des variables et paramètres créés et modifiés au cours de l'exécution des programmes précités ; et
- une interface de communication 350 adaptée à transmettre et à recevoir des données.

Le dispositif 300 dispose également, de préférence, des éléments suivants :
- une ou plusieurs unités d'affichage 325 permettant de visualiser des données et pouvant servir d'interface graphique avec un utilisateur, notamment l'ingénieur naviguant, qui pourra interagir avec des programmes selon l'invention, à l'aide d'un clavier et d'une souris 330 ou d'un autre dispositif de pointage tel qu'un écran tactile ou une télécommande ;
- d'un disque dur 335 pouvant comporter les programmes précités ainsi que des informations traitées ou à traiter selon l'invention ; et
- d'un lecteur de supports mémoires 340 adapté à recevoir un support mémoire 345 (par exemple une carte mémoire, un CD, une clé USB) et à y lire ou à y écrire des données traitées ou à traiter selon l'invention.

Le bus de communication permet la communication et l'interopérabilité entre les différents éléments inclus dans le dispositif 300 ou reliés à lui. La représentation du bus n'est pas limitative et, notamment, l'unité centrale est susceptible de communiquer des instructions à tout élément du dispositif 300 directement ou par l'intermédiaire d'un autre élément du dispositif 300.

Le code exécutable de chaque programme permettant au dispositif programmable de mettre en oeuvre les processus selon l'invention, peut être stocké, par exemple, dans le disque dur 335 ou en mémoire morte 315.

Selon une variante, le support mémoire 345 peut contenir des informations, notamment des informations à traiter selon l'invention telles que le rapport PFR brut obtenu de l'avion 1, ainsi que le code exécutable des programmes précités qui, une fois lu par le dispositif 300, est stocké dans le disque dur 335.

Selon une autre variante, le code exécutable des programmes et les informations à traiter selon l'invention pourront être reçus, au moins partiellement, par l'intermédiaire de l'interface 350, pour être stocké de façon identique à celle décrite précédemment.

De manière plus générale, le ou les programmes ainsi que les informations à traiter selon l'invention pourront être chargés dans un des moyens de stockage du dispositif 300 avant d'être exécutés.

L'unité centrale 310 va commander et diriger l'exécution des instructions ou portions de code logiciel du ou des programmes selon l'invention, instructions qui sont stockées dans le disque dur 335 ou dans la mémoire morte 315 ou bien dans les autres éléments de stockage précités. Lors de la mise sous tension, le ou les programmes qui sont stockés dans une mémoire non volatile, par exemple le disque dur 335 ou la mémoire morte 315, sont transférés dans la mémoire vive 320 qui contient alors le code exécutable du ou des programmes selon l'invention, ainsi que des registres pour mémoriser les variables et paramètres nécessaires à la mise en oeuvre de l'invention.

Lors des tests de production, il a été constaté que les signaux d'anomalie émis par les systèmes embarqués de l'avion sont susceptibles d'être classés en différentes catégories.

Une première catégorie de signaux d'anomalie est liée à la configuration même de l'avion lors de l'essai pendant lequel ceux-ci sont enregistrés. En effet, nombre d'essais sont réalisés alors même que l'avion n'est pas dans sa configuration définitive. Par exemple des essais sont réalisés sur le « porteur » ou « green aircraft » (ou Green A/C), c'est-à-dire l'avion capable de voler mais n'incluant pas les systèmes avioniques et les aménagements intérieurs prévus par le futur acquéreur ( généralement une compagnie aérienne). Ainsi généralement les porteurs ne comprennent que le cockpit comme aménagement intérieur, la cabine commerciale (incluant cuisine, toilettes, etc.) étant manquante.

L'absence de tels équipements d'aménagement est susceptible de générer des signaux d'anomalie au système CMS (par exemple tous les signaux de cabine sont erronés). Ces signaux d'anomalie étant volontairement émis du fait de la configuration avion utilisée, ils ne révèlent aucune anomalie et sont donc assimilés à des « fausses anomalies » dans le cadre de l'essai en cours.

Une deuxième catégorie de signaux d'anomalie est liée aux tests réalisés pendant le programme d'essai courant à dérouler. Par exemple, les pilotes d'essai génèrent volontairement des anomalies pour tester des fonctions de redondance ou des modes dégradés. Ces actions volontaires PATM (pour Production Aircraft Test Manual) sont donc susceptibles de générer des signaux d'anomalie au système CMS, alors que ceux-ci ne révèlent aucune anomalie et sont donc assimilés à des « fausses anomalies », dites PATM, dans le cadre de l'essai en cours.

Une troisième catégorie de signaux d'anomalie est liée aux propres limitations ou déviations des systèmes embarqués. Une fois ces limitations ou déviations connues, elles sont assimilées à des bogues ou dysfonctionnements de ces systèmes. Ces bogues peuvent générer des signaux d'anomalie au système CMS alors même que ces bogues ne révèlent aucune anomalie. Cette troisième catégorie de signaux d'anomalie constitue également des « fausses anomalies » dans le cadre de l'essai en cours.

Cette troisième catégorie comprend des déviations définies dans des bulletins de service SIL (pour Service Information Letter) diffusés aux compagnies aériennes ainsi que des déviations identifiées par les bureaux d'étude ou les concepteurs des systèmes embarqués dans des notes techniques TN non diffusées auprès des compagnies aériennes utilisatrices finales des avions 1. Généralement, un bulletin de service SIL comprend des informations de maintenance spécifiques à la déviation concernée par ce bulletin pour permettre au personnel de la compagnie aérienne de solutionner le bogue (ce peut être par exemple via une réinitialisation du système embarqué correspondant).

Enfin une quatrième catégorie de signaux d'anomalie regroupe les « vraies » anomalies qui ont été émises par les systèmes embarqués pendant l'essai et qu'il convient de solutionner. La présente invention vise en particulier à identifier, dans le rapport PFR, les signaux d'anomalie de cette quatrième catégorie afin de permettre à l'opérateur de maintenance de se concentrer sur celles-ci.

Le système 300 de détection d'anomalies selon l'invention comprend alors au moins une base de données référençant une pluralité d'anomalies prédéfinies, dites fausses anomalies. Elle regroupe donc les anomalies des trois premières catégories précitées et est alimentée par les bureaux d'études, les mises au point de l'avion et/ou les retours d'expérience (avions déjà en exploitation). Chaque « fausse anomalie » peut par exemple être mémorisée dans cette base de données à l'aide de son identifiant unique « Fault Code ».

Par exemple une première base de données peut contenir les « fausses anomalies » liées à la configuration de l'avion (par exemple Green A/C), une deuxième base de données les « fausses anomalies » PATM, une troisième base de données les « fausses anomalies» SIL et une quatrième base de données les « fausses anomalies » TN. La troisième base de données, SIL, peut en outre contenir, pour chaque « fausse anomalie » qui y est référencée, les informations complémentaires de maintenance telles que définies dans le bulletin de service SIL correspondant diffusé aux compagnies aériennes.

Les bases de données sont régulièrement vérifiées et mises à jour si nécessaire.

En outre, comme on le verra par la suite, ces bases de données sont susceptibles d'être mises à jour à partir d'au moins une « fausse anomalie » identifiée initialement comme « vraie anomalie » dans ledit rapport généré par l'invention mais déclassée par un opérateur de maintenance. En effet, cette mise à jour prend part à l'apprentissage du système de détection aux fins de détecter efficacement les « vraies anomalies ».

Par ailleurs, compte tenu des configurations d'avion et des tests pratiqués qui peuvent varier d'un essai à l'autre, ces bases de données utilisées pour identifier, dans un rapport PFR, les anomalies à solutionner peuvent être à géométrie variable. En d'autres termes, avant de traiter un rapport PFR selon l'invention, ces bases de données peuvent être ajustées à la configuration de l'avion utilisée pour générer ce rapport (pour lister dans la première base de données uniquement les signaux d'anomalie qui seront nécessairement générés du fait de cette configuration - absence d'un ou plusieurs équipements particuliers) et/ou à l'ensemble des tests prévus dans le programme d'essai effectué (pour lister dans la deuxième base de données uniquement les signaux d'anomalie qui seront nécessairement générés du fait des actions volontaires PATM de l'équipage pendant l'essai). Ainsi, avant de traiter le rapport PFR issu de l'avion, ladite au moins une base de données est générée en fonction d'une configuration matérielle de l'aéronef pendant ladite phase de fonctionnement et en fonction de tests menés sur ledit aéronef pendant ladite phase de fonctionnement.

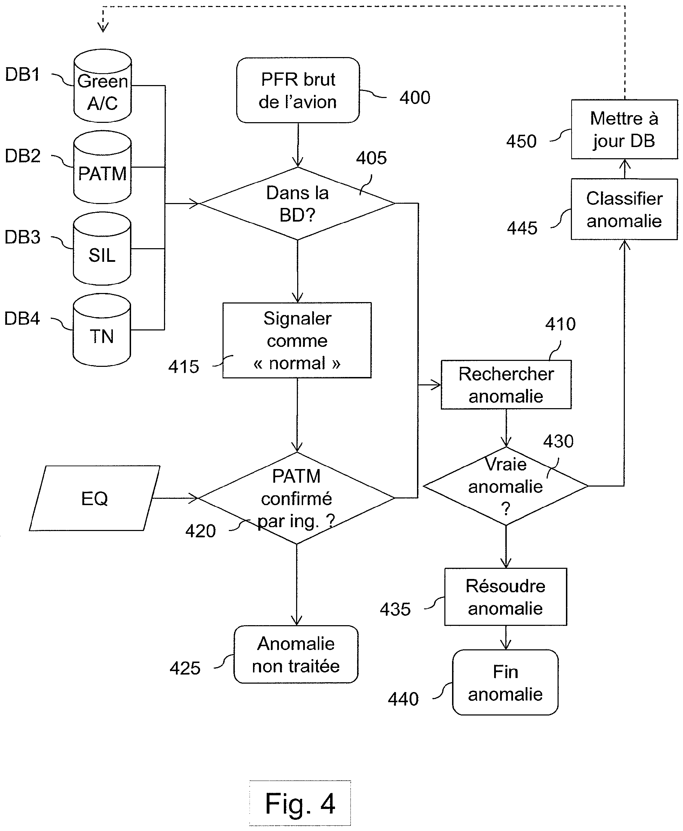

La **figure 4** est un ordinogramme illustrant des étapes générales d'un mode de réalisation de l'invention. Sur cette figure on retrouve les quatre bases de données DB1 « Green A/C », DB2 « PATM », DB3 « SIL » et DB4 « TN » précitées ainsi que l'équipage EQ participant aux opérations de test via les actions volontaires PATM prédéfinies.

Le procédé de détection selon l'invention débute à l'étape 400 par l'obtention d'un ensemble de signaux d'anomalie émis par au moins un calculateur embarqué 10 de l'aéronef 1 pendant une phase de fonctionnement de ce dernier. Typiquement, il s'agit d'obtenir le rapport PFR au format XML généré par le CMS.

Les étapes du procédé de la **figure 4** sont réalisées pour chacun des signaux d'anomalie listés dans ce rapport PFR, par exemple celui illustré par la **figure 2****.**

A l'étape 405, le signal d'anomalie courant listé dans le rapport PFR est confronté aux bases de données BD1-BD4 référençant une pluralité de fausses anomalies. Il s'agit pour le système de détection de comparer ou corréler automatiquement ce signal d'anomalie courant à chacune des fausses anomalies listées dans ces bases de données afin de déterminer s'il s'agit effectivement d'une fausse anomalie ou bien d'une vraie anomalie à solutionner.

Si le Fault Code du signal d'anomalie courant n'est pas présent dans ces bases de données, il s'agit d'une anomalie à solutionner. Ce signal d'anomalie courant est donc marqué comme « à solutionner » dans le rapport PFR lors de l'étape 410 au cours de laquelle cette anomalie est analysée et traitée.

En revanche, si le Fault Code du signal d'anomalie courant correspond au Fault Code d'une des entrées de ces bases de données DB1-DB4, alors ce signal d'anomalie est marqué (étape 415) comme « normal », c'est-à-dire comme signifiant qu'il s'agit d'une « fausse » anomalie.

A l'étape 420, le système de détection identifie si le signal d'anomalie courant est lié aux tests menés sur l'aéronef. En d'autres termes il détermine si son Fault Code est présent dans la deuxième base de données « PATM » DB2. Si ce n'est pas le cas, on passe directement à l'étape 425 consistant à ne pas traiter cette « fausse anomalie » non liée aux tests PATM.

En revanche si tel est le cas, l'étape 420 consiste en plus pour l'équipage EQ, généralement l'ingénieur naviguant, à confirmer ou infirmer la classification comme fausse anomalie dudit signal d'anomalie courant ainsi identifié. Cette confirmation ou infirmation est notamment fonction de l'information d'horodatage associée au signal d'anomalie courant identifié. En effet, cette étape consiste pour l'ingénieur naviguant à valider si, oui ou non, le signal de prétendue fausse anomalie est effectivement le résultat d'une action volontaire PATM du pilote pendant l'essai, c'est-à-dire un signal d'anomalie nécessairement déclenché par cette action de test. L'ingénieur naviguant compare notamment l'horaire de survenance de ce signal d'anomalie avec l'horaire de réalisation de l'action volontaire théoriquement associée (correspondant au système embarqué générant un signal d'anomalie ayant le même identifiant unique Fault Code).

Si l'ingénieur naviguant confirme la classification de la anomalie en tant que fausse anomalie car résultant d'une action volontaire PATM de l'équipage, le procédé se poursuit à l'étape 425 où cette anomalie confirmée comme « fausse » n'est pas traitée.

En revanche, si l'ingénieur naviguant infirme la classification de la anomalie, c'est-à-dire qu'il ne valide pas l'existence d'une action volontaire PATM temporellement corrélée au signal d'anomalie courant, ce signal d'anomalie courant est marqué comme « à solutionner » en passant à l'étape 410.

Les étapes 405 et 420 permettent ainsi de générer, à partir du résultat de la confrontation entre chaque signal d'anomalie du PFR et les bases de données, un rapport REP identifiant les anomalies à solutionner parmi l'ensemble de signaux d'anomalie du PFR. Un opérateur de maintenance utilisant ce rapport identifie ainsi directement les anomalies « d'intérêt », c'est-à-dire celles qu'il doit analyser et résoudre. Son temps d'intervention est ainsi réduit.

Par différence, l'opérateur de maintenance sait que les autres anomalies listées dans le rapport PFR initial sont liées à la configuration de l'avion, au programme d'essai ou à des déviations connues des systèmes embarqués. Ces autres anomalies sont marquées comme « fausses anomalies » dans le rapport REP.

En pratique, l'opérateur de maintenance va vérifier et confirmer le classement de tout ou partie des anomalies classées comme « fausses anomalies » et va directement traiter les anomalies à solutionner. Cette vérification s'effectue à l'expérience de l'opérateur de maintenance et/ou par le contrôle d'une information d'horodatage comme décrit précédemment et/ou par la consultation de documents techniques établis par le bureau d'études, par exemple.

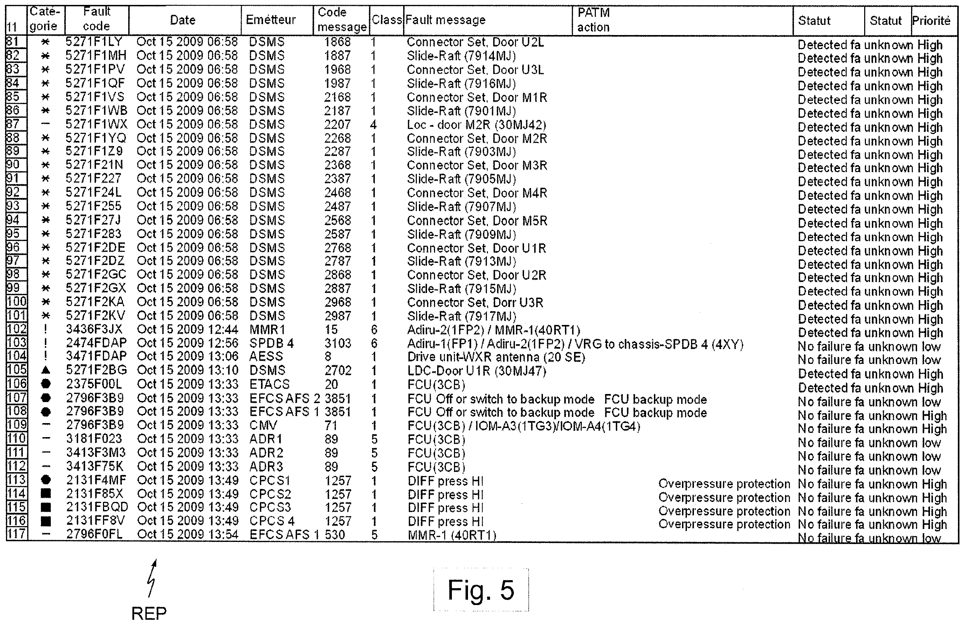

La **Figure 5** illustre une interface fournie à l'ingénieur naviguant et/ou à un opérateur de maintenance pour la gestion des signaux d'anomalie du PFR et l'affichage du rapport REP généré par l'invention. Dans cet exemple, le rapport REP est entièrement affiché sous forme de tableau où chaque ligne correspond à un signal d'anomalie distinct issu du PFR. Dans ce rapport affiché, une signalétique particulière ou des marques distinctives permettent de distinguer les signaux d'anomalie de chaque catégorie. Ces marques distinctives peuvent consister à utiliser des couleurs de surlignage différentes pour chacune des catégories ou sous-catégories. Ce peut également être tout autre type d'indicateur permettant d'identifier directement les signaux d'anomalie « à solutionner ».

En conservant dans le rapport REP l'ensemble des signaux d'anomalie du PFR, fausses anomalies et anomalies à solutionner, l'opérateur de maintenance a la possibilité de revenir sur un classement en « fausse anomalie » réalisé automatiquement par le système. En effet, l'expérience montre que des cas inattendus/non prévus par le système peuvent se produire, générant de la sorte des « fausses anomalies » de façon erronée. L'opérateur de maintenance, de par sa propre expérience, est enclin à détecter ces « fausses anomalies » erronées.

Dans l'exemple, on utilise une première marque (' 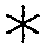 ' sur la figure) pour les signaux d'anomalie classés dans la première catégorie « Green A/C », une deuxième marque ('■') différente pour les signaux d'anomalie classés dans la deuxième catégorie « PATM » non encore confirmés lors de l'étape 420, une troisième marque ('●') différente pour les signaux d'anomalie classés dans la deuxième catégorie « PATM » et confirmés par l'ingénieur naviguant lors de l'étape 420, une quatrième marque ('-')différente pour les signaux d'anomalie classés dans la sous-catégorie « SIL » de la troisième catégorie, une cinquième marque ('▲') différente pour les signaux d'anomalie classés dans la sous-catégorie « NT » de la troisième catégorie et une sixième marque ('!') différente pour les signaux d'anomalie classés comme « à solutionner ». En variante, six couleurs différentes peuvent être utilisées.

En variante, une première marque peut être utilisée pour tous les signaux d'anomalie « à solutionner » et ceux de type « PATM » non encore confirmés, et une seconde marque pour les autres signaux d'anomalie à ne pas traiter (« Green A/C », « SIL », « NT », « PATM » confirmés). Des configurations intermédiaires sont également envisageables.

L'affichage du rapport REP généré permettant d'identifier les signaux d'anomalie « à solutionner » est mis à jour en temps réel au fur et à mesure que l'ingénieur naviguant confirme ou infirme des signaux d'anomalie « PATM ». Les signaux d'anomalie initialement marqués par la deuxième marque passent ainsi soit en signaux d'anomalie marqués par la troisième marque distinctive (en cas de confirmation à l'étape 420), soit en signaux d'anomalie « à solutionner » marqués par la sixième marque distinctive (en cas d'infirmation à l'étape 420).

La **figure 6** montre une fonction supplémentaire mise en oeuvre lors de l'affichage du rapport PFR augmenté de l'invention (c'est-à-dire identifiant les signaux d'anomalie « à solutionner »). Cette fonction supplémentaire est en particulier mise en oeuvre en présence de signaux d'anomalie type « SIL », voire « NT » par l'affichage, en cas de survol de la ligne correspondant à un tel signal d'anomalie ou en cas d'action volontaire de l'utilisateur sur une telle ligne (double clic, activation d'un menu, etc.), d'une fenêtre ADDINFO reprenant les informations complémentaires de maintenance correspondant à ce signal d'anomalie. Ces informations, type actions de maintenance à effectuer, peuvent être aisément récupérées à la demande dans la base de données DB3 ou DB4 à partir de l'identifiant unique Fault Code. L'opérateur de maintenance utilisant cette interface a ainsi directement connaissance des opérations de maintenance qu'il doit mettre en oeuvre. Son temps d'intervention est ainsi réduit.

Partant de ce rapport généré par l'invention et permettant d'identifier aisément les anomalies « à solutionner », l'opérateur de maintenance procède donc à une investigation de chacune d'entre elles lors de l'étape 410. Cette investigation est de type classique englobant une recherche et une analyse d'anomalie.

Si l'opérateur de maintenance détermine qu'il s'agit d'une véritable anomalie (test 430), il procède à sa résolution par des moyens classiques (étape 435) ce qui met fin à l'anomalie (étape 440).

En revanche, si l'opérateur de maintenance détermine que le signal d'anomalie courant « à solutionner » n'indique pas une véritable anomalie (test 430), par exemple parce qu'il s'agit d'un bogue jusqu'alors inconnu, une analyse de ce signal d'anomalie est opérée pour en effectuer une classification parmi l'une des catégories « Green A/C », « PATM », « SIL », « NT » précitées (étape 445).

Cette classification déclenche une mise à jour des bases de données (étape 450) par l'ajout de cette nouvelle « fausse » anomalie comme nouvelle entrée dans la base de données correspondant à la catégorie dans laquelle elle a été classée à l'étape 445. La flèche en pointillés sur la **figure 4** illustre cette mise à jour des bases de données.

Les exemples qui précèdent ne sont que des modes de réalisation de l'invention qui ne s'y limite pas.

## Revendications

1. Procédé de détection d'anomalies à solutionner dans un aéronef (1), comprenant les étapes suivantes :
- obtenir (400), d'un système central de maintenance (CMS) embarqué de l'aéronef (1), un ensemble de signaux d'anomalie (PFR) émis par au moins un calculateur (10) embarqué de l'aéronef (1) pendant une phase de fonctionnement de ce dernier ;
- confronter (405) ledit ensemble de signaux d'anomalie (PFR) à au moins une base de données (DB1-DB4) référençant une pluralité d'anomalies prédéfinies, dites fausses anomalies; et
- générer (410), à partir du résultat de la confrontation, un rapport (REP) comprenant l'ensemble des signaux d'anomalie obtenus, identifiant les anomalies à solutionner parmi l'ensemble de signaux d'anomalie ;
le procédé étant **caractérisé en ce que** :
- ledit rapport identifie les fausses anomalies ;
- un ensemble de fausses anomalies référencées dans ladite au moins une base de données (DB1) est fonction d'une configuration courante de l'aéronef ;
- ladite au moins une base de données (DB2) référence comme fausses anomalies des signaux d'anomalie (PATM) liés à des actions volontaires de test menées sur l'aéronef (1) lors d'essais pendant ladite phase de fonctionnement ; et
- ladite au moins une base de données (DB1-DB4) référence comme fausses anomalies des déviations (SIL, TN) connues de systèmes (10) embarqués dans l'aéronef (1).

2. Procédé de détection selon la revendication 1, comprenant en outre les étapes suivantes :
- identifier, parmi l'ensemble obtenu de signaux d'anomalie, des signaux d'anomalie (PATM) liés à des actions volontaires de test menées sur l'aéronef (1) lors d'essais pendant ladite phase de fonctionnement ; et
- confirmer ou infirmer (420), par un opérateur, la classification comme fausse anomalie de chaque signal d'anomalie ainsi identifié par comparaison avec des anomalies résultant des actions volontaires et stockées dans l'au moins une base de données.

3. Procédé de détection selon la revendication 2, dans lequel la confirmation ou infirmation (420) est fonction d'une information d'horodatage dudit signal d'anomalie identifié, laquelle information d'horodatage pour le signal d'anomalie identifié étant comparée à un horaire de réalisation d'une dite action volontaire.

4. Procédé de détection selon l'une des revendications précédentes, comprenant en outre l'étape consistant à générer ladite au moins une base de données (DB1-DB4) avant ladite confrontation (405), en fonction d'une configuration matérielle de l'aéronef (1) pendant ladite phase de fonctionnement et en fonction de tests (PATM) menés sur ledit aéronef (1) pendant ladite phase de fonctionnement.

5. Procédé de détection selon l'une des revendications précédentes, dans lequel ledit rapport (REP) généré liste également lesdites fausses anomalies de l'ensemble obtenu de signaux d'anomalie, et inclut, pour chaque fausse anomalie de type déviation connue, une information de maintenance (ADDINFO) prédéfinie dans ladite au moins une base de données (DB3).

6. Procédé de détection selon l'une des revendications précédentes, comprenant en outre une étape consistant à mettre à jour ladite au moins une base de données (DB1-DB4) à partir d'au moins une fausse anomalie identifiée (430) dans ledit rapport généré (REP).

7. Procédé de détection selon l'une des revendications précédentes, dans lequel les signaux d'anomalie obtenus du système central de maintenance comprennent chacun un identifiant unique respectif, et ladite confrontation comprend la comparaison de l'identifiant unique de chaque signal d'anomalie obtenu avec des identifiants uniques de fausses anomalies stockés dans l'au moins une base de données.

8. Système (300) de détection d'anomalies à solutionner dans un aéronef (1), comprenant:
- au moins une base de données (DB1-DB4) référençant une pluralité d'anomalies prédéfinies, dites fausses anomalies;
- un module d'obtention, en provenance d'un système central de maintenance (CMS) embarqué de l'aéronef (1), d'un ensemble de signaux d'anomalie (PFR) émis par au moins un calculateur embarqué (10) de l'aéronef (1) pendant une phase de fonctionnement de ce dernier ;
- un module pour confronter ledit ensemble de signaux d'anomalie (PFR) à l'au moins une base de données (DB1-DB4) ; et
- un module pour générer, à partir du résultat de la confrontation, un rapport (REP) comprenant l'ensemble des signaux d'anomalie obtenus,
le système étant **caractérisé en ce que** :
- ledit rapport identifie les anomalies à solutionner parmi l'ensemble de signaux d'anomalie et identifiant les fausses anomalies ; et
- ladite au moins une base de données comprend une première base de données (DB1) référençant des signaux d'anomalie fonction d'une configuration courante de l'aéronef ; une seconde base de données (DB2) référençant des signaux d'anomalie liés à des actions volontaires de test (PATM) menées sur l'aéronef lors d'essais pendant ladite phase de fonctionnement ; et une troisième base de données (DB3-DB4) référençant des déviations connues de systèmes (10) embarqués dans l'aéronef (1).

9. Système de détection (300) selon la revendication 8, dans lequel le module pour confronter identifie, parmi l'ensemble obtenu de signaux d'anomalie, des signaux d'anomalie (PATM) liés à des actions volontaires de test menées sur l'aéronef (1) lors d'essais pendant ladite phase de fonctionnement; et le système (300) comprend un module pour confirmer ou infirmer, via une interface homme-machine, la classification comme fausse anomalie de chaque signal d'anomalie ainsi identifié en fonction d'une information d'horodatage dudit signal d'anomalie identifié, laquelle information d'horodatage pour le signal d'anomalie identifié étant comparée à un horaire de réalisation d'une dite action volontaire.

10. Système de détection (300) selon l'une des revendications 8 à 9, comprenant en outre un module de mise à jour de ladite de l'au moins une base de données des fausses anomalies (DB1-DB4) à partir d'au moins une fausse anomalie identifiée dans ledit rapport généré (REP).

## Patentansprüche

1. Verfahren zur Erkennung von Fehlern, die in einem Luftfahrzeug (1) zu lösen sind, umfassend die folgenden Schritte:
- Erhalten (400) einer Menge von Fehlersignalen (PFR), die von mindestens einem integrierten Rechner (10) des Luftfahrzeugs (1) während einer Phase von dessen Betrieb gesendet wird, von einem in das Luftfahrzeug (1) integrierten zentralen Wartungssystem (CMS);
- Abgleichen (405) der Menge von Fehlersignalen (PFR) mit mindestens einer Datenbank (DB1-DB4), in der eine Vielzahl von vordefinierten Fehlern, falsche Fehler genannt, gelistet sind, und
- Erzeugen (410), ausgehend vom Ergebnis des Abgleichs, eines Berichts (REP), der die Menge der erhaltenen Fehlersignale umfasst und der die Fehler identifiziert, die aus der Menge von Fehlersignalen zu lösen sind; wobei das Verfahren **dadurch gekennzeichnet ist, dass**:
- der Bericht die falschen Fehler identifiziert;
- eine Menge von falschen Fehlern, die in der mindestens einen Datenbank (DB1) gelistet sind, von einer aktuellen Konfiguration des Luftfahrzeugs abhängig ist;
- die mindestens eine Datenbank (DB2) als falsche Fehler Fehlersignale (PATM) listet, die mit beabsichtigten Testaktionen zusammenhängen, die am Luftfahrzeug (1) bei Checks während der Betriebsphase durchgeführt werden, und
- die mindestens eine Datenbank (DB1-DB4) als falsche Fehler bekannte Abweichungen (SIL, TN) von in das Luftfahrzeug (1) integrierten Systemen (10) listet.

2. Verfahren zur Erkennung nach Anspruch 1, das darüber hinaus die folgenden Schritte umfasst:
- Identifizieren, unter der erhaltenen Menge von Fehlersignalen, der Fehlersignale (PATM), die mit beabsichtigten Testaktionen zusammenhängen, die am Luftfahrzeug (1) bei Checks während der Betriebsphase durchgeführt werden, und
- Bestätigen oder Entkräften (420) der Einstufung jedes so identifizierten Fehlersignals als falschen Fehler durch einen Techniker durch Vergleichen mit Fehlern, die aus beabsichtigten Aktionen resultieren und in der mindestens einen Datenbank gespeichert sind.

3. Verfahren zur Erkennung nach Anspruch 2, wobei das Bestätigen oder Entkräften (420) von einer Zeitstempelinformation des identifizierten Fehlersignals abhängig ist, wobei die Zeitstempelinformation für das identifizierte Fehlersignal mit einer Ausführungszeit einer gegebenen beabsichtigten Aktion verglichen wird.

4. Verfahren zur Erkennung nach einem der vorhergehenden Ansprüche, das darüber hinaus den Schritt umfasst, der darin besteht, die mindestens eine Datenbank (DB1-DB4) vor dem Abgleich (405) in Abhängigkeit von einer Hardwarekonfiguration des Luftfahrzeugs (1) während der Betriebsphase und in Abhängigkeit von Tests (PATM), die am Luftfahrzeug (1) während der Betriebsphase durchgeführt werden, zu erzeugen.

5. Verfahren zur Erkennung nach einem der vorhergehenden Ansprüche, wobei der erzeugte Bericht (REP) auch die falschen Fehler der erhaltenen Menge von Fehlersignalen aufführt und für jeden falschen Fehler von der Art einer bekannten Abweichung eine Wartungsinformation (ADDINFO) beinhaltet, die in der mindestens einen Datenbank (DB3) vordefiniert ist.

6. Verfahren zur Erkennung nach einem der vorhergehenden Ansprüche, das darüber hinaus einen Schritt umfasst, der darin besteht, die mindestens eine Datenbank (DB1-DB4) ausgehend von mindestens einem in dem erzeugten Bericht (REP) identifizierten falschen Fehler (430) zu aktualisieren.

7. Verfahren zur Erkennung nach einem der vorhergehenden Ansprüche, wobei die vom zentralen Wartungssystem erhaltenen Fehlersignale jeweils eine einmalige Kennung umfassen und der Abgleich das Vergleichen der einmaligen Kennung jedes erhaltenen Fehlersignals mit einmaligen Kennungen von falschen Fehlern, die in der mindestens einen Datenbank gespeichert sind, umfasst.

8. System (300) zur Erkennung von Fehlern, die in einem Luftfahrzeug (1) zu lösen sind, umfassend:
- mindestens eine Datenbank (DB1-DB4), in der eine Vielzahl von vordefinierten Fehlern, falsche Fehler genannt, gelistet sind;
- ein Modul zum Erhalten einer Menge von Fehlersignalen (PFR), die von mindestens einem integrierten Rechner (10) des Luftfahrzeugs (1) während einer Phase von dessen Betrieb gesendet wird, von einem in das Luftfahrzeug (1) integrierten zentralen Wartungssystem (CMS) ;
- ein Modul zum Abgleichen der Menge von Fehlersignalen (PFR) mit der mindestens einen Datenbank (DB1-DB4), und
- ein Modul zum Erzeugen, ausgehend vom Ergebnis des Abgleichs, eines Berichts (REP), der die Menge der erhaltenen Fehlersignale umfasst, wobei das System **dadurch gekennzeichnet ist, dass**:
- der Bericht die zu lösenden Fehler unter der Menge von Fehlersignalen identifiziert und die falschen Fehler identifiziert, und
- die mindestens eine Datenbank eine erste Datenbank (DB1), die Fehlersignale in Abhängigkeit von einer aktuellen Konfiguration des Luftfahrzeugs listet, eine zweite Datenbank (DB2), die Fehlersignale listet, die mit beabsichtigten Testaktionen (PATM) zusammenhängen, die am Luftfahrzeug bei Checks während der Betriebsphase durchgeführt werden, und eine dritte Datenbank (DB3-DB4), die bekannte Abweichungen von in das Luftfahrzeug (1) integrierten Systemen (10) listet, umfasst.

9. System zur Erkennung (300) nach Anspruch 8, wobei das Modul zum Abgleichen unter der erhaltenen Menge von Fehlersignalen Fehlersignale (PATM) identifiziert, die mit beabsichtigten Testaktionen zusammenhängen, die am Luftfahrzeug (1) bei Checks während der Betriebsphase durchgeführt werden, und das System (300) ein Modul umfasst, um über eine Mensch-Maschine-Schnittstelle die Einstufung jedes so identifizierten Fehlersignals als falscher Fehler in Abhängigkeit von einer Zeitstempelinformation des identifizierten Fehlersignals zu bestätigen oder zu entkräften, wobei die Zeitstempelinformation für das identifizierte Fehlersignal mit einer Ausführungszeit einer gegebenen beabsichtigten Aktion verglichen wird.

10. System zur Erkennung (300) nach einem der Ansprüche 8 bis 9, das darüber hinaus ein Modul zur Aktualisierung der mindestens einen Datenbank der falschen Fehler (DB1-DB4) ausgehend von mindestens einem in dem erzeugten Bericht (REP) identifizierten falschen Fehler umfasst.

## Claims

1. Method for detecting anomalies to be solved in an aircraft (1), comprising the following steps:
- obtaining (400), from an embedded central maintenance system (CMS) on board the aircraft (1), a set of anomaly signals (PFR) emitted by at least one embedded computer (10) on board the aircraft (1) during an operating phase of the latter;
- collating (405) the said set of anomaly signals (PFR) with at least one database (DB1-DB4) referencing a plurality of predefined anomalies, so-called false anomalies; and
- generating (410), on the basis of the result of the collation, a report (REP) comprising the set of anomaly signals obtained, which identifies the anomalies to be solved from among the set of anomaly signals;
the method being **characterized in that**:
- the said report identifies the false anomalies;
- a set of false anomalies referenced in the said at least one database (DB1) is dependent on a current configuration of the aircraft;
- the said at least one database (DB2) references as false anomalies anomaly signals (PATM) related to intentional test actions conducted on the aircraft (1) during trials during the said operating phase; and
- the said at least one database (DB1-DB4) references as false anomalies known deviations (SIL, TN) of embedded systems (10) on board the aircraft (1)

2. Detection method according to Claim 1, furthermore comprising the following steps:
- identifying, from among the set obtained of anomaly signals, anomaly signals (PATM) related to intentional test actions conducted on the aircraft (1) during trials during the said operating phase; and
- confirming or denying (420), by an operator, the classification as false anomaly of each anomaly signal thus identified by comparison with anomalies resulting from the intentional actions and stored in the at least one database.

3. Detection method according to Claim 2, in which the confirmation or denial (420) is dependent on an information item in respect of time-stamping of the said anomaly signal identified, which time-stamping information item for the anomaly signal identified being compared with a timetable for carrying out a said intentional action.

4. Detection method according to one of the preceding claims, furthermore comprising the step consisting in generating the said at least one database (DB1-DB4) before the said collation (405), as a function of a hardware configuration of the aircraft (1) during the said operating phase and as a function of tests (PATM) conducted on the said aircraft (1) during the said operating phase.

5. Detection method according to one of the preceding claims, in which the said report (REP) generated also lists the said false anomalies of the set obtained of anomaly signals, and includes, for each false anomaly of known deviation type, a maintenance information item (ADDINFO) predefined in the said at least one database (DB3) .

6. Detection method according to one of the preceding claims, furthermore comprising a step consisting in updating the said at least one database (DB1-DB4) on the basis of at least one false anomaly identified (430) in the said report generated (REP).

7. Detection method according to one of the preceding claims, in which the anomaly signals obtained from the central maintenance system each comprise a respective unique identifier, and the said collation comprises the comparison of the unique identifier of each anomaly signal obtained with unique identifiers of false anomalies, which identifiers are stored in the at least one database.

8. System (300) for detecting anomalies to be solved in an aircraft (1), comprising:
- at least one database (DB1-DB4) referencing a plurality of predefined anomalies, so-called false anomalies;
- a module for obtaining, originating from an embedded central maintenance system (CMS) on board the aircraft (1), a set of anomaly signals (PFR) emitted by at least one embedded computer (10) on board the aircraft (1) during an operating phase of the latter;
- a module for collating the said set of anomaly signals (PFR) with the at least one database (DB1-DB4); and
- a module for generating, on the basis of the result of the collation, a report (REP) comprising the set of anomaly signals obtained,
the system being **characterized in that**:
- the said report identifies the anomalies to be solved from among the set of anomaly signals and identifying the false anomalies; and
- the said at least one database comprises a first database (DB1) referencing anomaly signals dependent on a current configuration of the aircraft; a second database (DB2) referencing anomaly signals related to intentional test actions (PATM) conducted on the aircraft during trials during the said operating phase; and a third database (DB3-DB4) referencing known deviations of embedded systems (10) on board the aircraft (1).

9. Detection system (300) according to Claim 8, in which the module for collating identifies, from among the set obtained of anomaly signals, anomaly signals (PATM) related to intentional test actions conducted on the aircraft (1) during trials during the said operating phase; and the system (300) comprises a module for confirming or denying, via a man-machine interface, the classification as false anomaly of each anomaly signal thus identified as a function of an information item in respect of time-stamping of the said anomaly signal identified, which time-stamping information item for the anomaly signal identified being compared with a timetable for carrying out a said intentional action.

10. Detection system (300) according to one of Claims 8 to 9, furthermore comprising a module for updating the said of the at least one database of the false anomalies (DB1-DB4) on the basis of at least one false anomaly identified in the said report generated (REP).
